(19) Europäisches Patentamt
European Patent Office
Office européen des brevets

(11) **EP 4 471 085 A1**

(12) **EUROPEAN PATENT APPLICATION**
published in accordance with Art. 153(4) EPC

(43) Date of publication:
**04.12.2024 Bulletin 2024/49**

(21) Application number: **22922144.5**

(22) Date of filing: **16.12.2022**

(51) International Patent Classification (IPC):
*C08L 23/10* (2006.01)     *B29C 55/12* (2006.01)
*B65D 65/02* (2006.01)     *C08F 10/06* (2006.01)
*C08J 5/18* (2006.01)     *C08K 5/00* (2006.01)
*C08L 57/00* (2006.01)

(52) Cooperative Patent Classification (CPC):
**B29C 55/12; B65D 65/02; C08F 10/06; C08J 5/18;
C08K 5/00; C08L 23/10; C08L 57/00**

(86) International application number:
**PCT/JP2022/046428**

(87) International publication number:
**WO 2023/139993 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.01.2022 JP 2022008470**

(71) Applicant: **Sumitomo Chemical Company, Limited
Tokyo 103-6020 (JP)**

(72) Inventor: **TAKANO, Masaki
Ichihara-shi, Chiba 299-0195 (JP)**

(74) Representative: **Winter, Brandl - Partnerschaft
mbB
Alois-Steinecker-Straße 22
85354 Freising (DE)**

(54) **PROPYLENE-BASED POLYMER COMPOSITION, BIAXIALLY STRETCHED FILM, AND PACKAGING BAG**

(57)     The present invention provides a propylene-based polymer composition that is useful in production of a biaxially stretched film that has excellent dimensional stability at high temperatures. The propylene-based polymer composition comprises two or more types of propylene-based polymer and satisfies requirements (1) and (2) below. (1) The amount of components having a molecular weight of not more than 100,000, as measured by gel permeation chromatography, is 30-50 mass%. (2) The amount of components having a molecular weight of 100,000-800,000, as measured by gel permeation chromatography, is 35-52 mass%.

**EP 4 471 085 A1**

## Description

TECHNICAL FIELD

The present invention relates to a propylene-based polymer composition containing a propylene-based polymer, a biaxially stretched film using the propylene-based polymer composition, and a packaging bag using the biaxially stretched film.

BACKGROUND ART

Conventionally, for example, as a film used for various packaging materials, a film having a configuration in which a polyethylene terephthalate (PET)-based biaxially stretched film is used as a base film, and a polypropylene (PP)-based cast film or a polyethylene (PE)-based cast film is laminated on the base film as a sealant film is known. In the film having such a configuration, the base film has high rigidity and high heat resistance, and the sealant film has heat sealability at low temperatures, so that the film can exhibit excellent functions as various packaging bags.

In recent years, there has been an increasing demand for recycling the films of this type, and the use of mono-materials has been required. Specifically, it is considered suitable to employ, as a base film, a polypropylene-based biaxially stretched film, which is an olefin-based resin film of the same type as a sealant film composed of an olefin-based resin such as polypropylene or polyethylene.

However, the polypropylene-based biaxially stretched film has a higher heat shrinkage ratio than a polyethylene terephthalate-based biaxially stretched film and the like. For this reason, a film using a polypropylene-based biaxially stretched film as a base film has a problem that the use thereof is limited.

As a polypropylene-based biaxially stretched film having improved heat resistance, a film described in the following Patent Document 1 is conventionally known. Specifically, Patent Document 1 discloses a method for improving thermal shrinkage and rigidity by using a polypropylene having high stereoregularity as a stretched polypropylene film having crystal orientation in a predetermined range.

However, the film described in Patent Document 1 cannot be said to have sufficient dimensional stability at high temperatures.

PRIOR ART DOCUMENTS

PATENT DOCUMENT

Patent Document 1: WO 2015/012324 A

SUMMARY OF THE INVENTION

PROBLEMS TO BE SOLVED BY THE INVENTION

Thus, an object of the present invention is to provide a propylene-based polymer composition that is useful in production of a biaxially stretched film that has excellent dimensional stability at high temperatures. Another object of the present invention is to provide a biaxially stretched film using the propylene-based polymer composition, and a packaging bag using the biaxially stretched film.

MEANS FOR SOLVING THE PROBLEMS

The present invention provides the following [1] to [10] .

[1] A propylene-based polymer composition containing two or more types of propylene-based polymers and satisfying requirements (1) and (2) below:

(1) an amount of a component having a molecular weight of 100,000 or less, as measured by gel permeation chromatography, is 30 mass% to 50 mass%; and
(2) an amount of a component having a molecular weight of 100,000 or more and 800,000 or less, as measured by gel permeation chromatography, is 35 mass% to 52 mass%.

[2] The propylene-based polymer composition according to [1], further satisfying requirement (3) below:
(3) an amount of a component having a molecular weight of 800,000 or more, as measured by gel permeation chromatography, is 4 mass% to 18 mass%.

[3] The propylene-based polymer composition according to [1] or [2] containing: a propylene-based polymer (a) having a melt flow rate of 3 g/10 min or less and/or an intrinsic viscosity of 2.0 dL/g or more; and a propylene-based polymer (b) having a melt flow rate of 15 g/10 min or more and/or an intrinsic viscosity of 1.4 dL/g or less.

[4] The propylene-based polymer composition according to any one of [1] to [3], wherein the propylene-based polymer composition has a melt flow rate of 4 g/min to 20 g/min.

[5] The propylene-based polymer composition according to any one of [1] to [4], wherein the propylene-based polymer composition has an isotactic pentad fraction of 98.0% or more.

[6] The propylene-based polymer composition according to any one of [1] to [5], wherein the propylene-based polymer composition has an intrinsic viscosity of 1.3 dL/g to 2.3 dL/g.

[7] The propylene-based polymer composition according to any one of [1] to [6], further containing a stretchability improver.

[8] The propylene-based polymer composition according to [7], wherein the stretchability improver is at least one selected from the group consisting of a β-crystal nucleating agent and a hydrocarbon resin.

[9] A biaxially stretched film containing the propylene-based polymer composition according to any one of [1] to [8].

[10] A packaging bag including the biaxially stretched film according to [9].

EFFECT OF THE INVENTION

According to the present invention, a propylene-based polymer composition that is useful in production of a biaxially stretched film that has excellent dimensional stability at high temperatures can be provided. Further, according to the present invention, a biaxially stretched film using the propylene-based polymer composition and a packaging bag using the biaxially stretched film can be provided.

MODE FOR CARRYING OUT THE INVENTION

The propylene-based polymer composition according to the present embodiment contains two or more types of propylene-based polymers.

The propylene-based polymer is a polymer containing more than 50 mass% of monomer units derived from propylene. For example, the propylene-based polymer may be a propylene homopolymer or a propylene-based copolymer. The propylene-based polymer is preferably a propylene homopolymer from the viewpoint of the heat shrinkage ratio and rigidity of the biaxially stretched film. Examples of the propylene-based copolymer include those obtained by copolymerizing propylene with at least one comonomer selected from ethylene and an α-olefin having 4 to 20 carbon atoms.

Examples of the α-olefin having 4 to 20 carbon atoms include 1-butene, 2-methyl-1-propene, 1-pentene, 2-methyl-1-butene, 3-methyl-1-butene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methyl ethyl-1-butene, 1-octene, methyl-1-pentene, ethyl-1-hexene, dimethyl-1-hexene, propyl-1-heptene, methyl ethyl-1-heptene, trimethyl-1-pentene, propyl-1-pentene, diethyl-1-butene, 1-nonene, 1-decene, 1-undecene, and 1-dodecene. The α-olefin having 4 to 20 carbon atoms is preferably 1-butene, 1-pentene, 1-hexene, or 1-octene, and more preferably 1-butene.

Examples of the propylene-based copolymer include a propylene-ethylene copolymer and a propylene-α-olefin copolymer. Examples of the propylene-α-olefin copolymer include a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer. The propylene-α-olefin copolymer is preferably a propylene-ethylene copolymer, a propylene-1-butene copolymer, and a propylene-ethylene-1-butene copolymer.

When the propylene-based copolymer is a propylene-ethylene copolymer, the ethylene content is preferably 2.0 mass% or less, more preferably 1.0 mass% or less, and still more preferably 0.4 mass% or less from the viewpoint of the heat shrinkage ratio and rigidity of the biaxially stretched film.

When the propylene-based copolymer is a propylene-α-olefin copolymer, the α-olefin content is preferably 8.0 mass% or less, more preferably 3.0 mass% or less, and still more preferably 1.0 mass% or less from the viewpoint of the heat shrinkage ratio and rigidity of the biaxially stretched film.

When the propylene-based copolymer is a propylene-ethylene-α-olefin copolymer, the total content of ethylene and α-olefin is preferably 4.0 mass% or less, more preferably 3.0 mass% or less, and still more preferably 1.0 mass% or less from the viewpoint of the heat shrinkage ratio and rigidity of the biaxially stretched film.

The amount of the cold xylene soluble component (hereinafter, abbreviated as CXS) of the propylene-based polymer is preferably 2.0 mass% or less, more preferably 0.1 mass% to 1.5 mass%, and still more preferably 0.1 mass% to 1.0 mass%. When the CXS is in the above range, there is an effect that good stretching processability can be exhibited in the production of the biaxially stretched film, and high rigidity and excellent shrinkage ratio at high temperatures can be exhibited in the biaxially stretched film. The CXS of the propylene-based polymer can be adjusted to fall within the above range, for example, by selecting the type of external donor to be used in the polymerization of propylene. Specific examples of the external donor include cyclohexylethyldimethoxysilane, dicyclopentyldimethoxysilane, and di-tert-butyldimethoxysilane. The CXS can be determined by the same method as the method for measuring the CXS of the propylene-based polymer composition described in [Examples] described later.

The propylene-based polymer composition may contain two or more types of propylene-based polymers and other components. The total content of the two or more types of propylene-based polymers in the propylene-based polymer composition is preferably 80 mass% to 100 mass%, more preferably 90 mass% to 100 mass%, and still more preferably 99 mass% to 100 mass%. The propylene-based polymer composition usually contains a plurality of types of propylene-based polymers having different MFRs and/or intrinsic viscosities. The propylene-based polymer composition preferably contains a propylene-based polymer (a) having an MFR of 3 g/10 min or less and/or an intrinsic viscosity of 2.0 dL/g or more and a propylene-based polymer (b) having an MFR of 15 g/10 min or more and/or an intrinsic viscosity of 1.4 dL/g or less. The propylene-based polymer composition more preferably contains a propylene-based polymer (a) having an MFR of 0.003 to 1 g/10 min and/or an intrinsic viscosity of 2.7 to 7.3 dL/g and a propylene-based polymer (b) having an MFR of 30 to 800 g/10 min and/or an intrinsic viscosity of 0.6 to 1.2 dL/g. By using a propylene-based polymer composition containing a plurality of types of propylene-based polymers having different MFRs, there is an effect that good stretching processability is exhibited in the production of the biaxially stretched film, and high rigidity and an excellent shrinkage ratio at high temperatures are exhibited in the biaxially stretched film. The MFR and intrinsic viscosity of the propylene-based polymer can be changed, for example, by adjusting the concentration of hydrogen used in the polymerization of propylene. The MFR and the intrinsic viscosity can be determined by the same method as the method for measuring the MFR and the intrinsic viscosity of the propylene-based polymer composition described in [Examples] described later.

As for the contents of the propylene-based polymer (a) and the propylene-based polymer (b) in the propylene-based polymer composition, the content of the propylene-based polymer (a) is preferably 10 mass% to 65 mass%, and the content of the propylene-based polymer (b) is preferably 35 mass% to 90 mass%, with respect to the total content of the propylene-based polymer (a) and the propylene-based polymer (b). The content of the propylene-based polymer (a) is more preferably 20 mass% to 60 mass%, and the content of the propylene-based polymer (b) is more preferably 40 mass% to 80 mass%.

Examples of the method for producing a propylene-based polymer composition containing two or more types of propylene-based polymers include a method in which at least two types of propylene-based polymers are individually produced, and the obtained propylene-based polymers are mixed to form a propylene-based polymer composition. Examples of the method for individually producing at least two types of propylene-based polymers include known polymerization methods. Examples of the method include a solvent polymerization method performed in the presence of an inert solvent, a bulk polymerization method performed in the presence of a liquid monomer, and a gas phase polymerization method performed substantially in the absence of a liquid medium. A gas phase polymerization method is preferable. Examples of the method for producing a propylene-based polymer composition containing at least two types of propylene-based polymers include a polymerization method combining two or more types of the above-described polymerization methods, and a method of performing a plurality of polymerization processes in multiple stages (multistage polymerization method).

The method for mixing the at least two types of propylene-based polymers produced individually may be any method as long as these polymers are uniformly dispersed. Examples of the method include a method in which at least two types of propylene-based polymers are mixed by a ribbon blender, a Henschel mixer, a tumbler mixer, or the like, and the mixture is melt-kneaded by an extruder or the like, a method in which at least two types of propylene-based polymers are individually melt-kneaded and pelletized, and the resulting pellets are mixed in the same manner as described above and further melt-kneaded, a method in which at least two types of propylene-based polymers are individually melt-kneaded and pelletized, and the resulting pellets are blended by dry blending or the like and then directly mixed by a film processing machine, and a method in which at least two types of propylene-based polymers are individually melt-kneaded and pelletized, and the resulting pellets are individually fed to an extruder of a film processing machine and mixed. In addition, a method is also exemplified in which a masterbatch containing 1 to 99 parts by mass of one propylene-based polymer with respect to 100 parts by mass of the other propylene-based polymer is prepared in advance, and the masterbatch and the other propylene-based polymer are appropriately mixed so as to have a predetermined concentration.

When at least two types of propylene-based polymers produced individually are mixed, a stabilizer, a lubricant, an antistatic agent, an anti-blocking agent, various inorganic or organic fillers, and the like may be added as necessary.

As the catalyst used for the polymerization of each of at least two types of propylene-based polymers, a catalyst for stereoregular polymerization of propylene is used both in the case of individually polymerizing at least two types of propylene-based polymers and in the case of using the multistage polymerization method.

Examples of the catalyst for stereoregular polymerization of propylene include titanium trichloride catalysts; catalyst systems obtained by combining an organoaluminum compound, and as necessary, a third component such as an electron donating compound with a solid catalyst component such as a Ti-Mg-based catalyst containing titanium, magnesium, halogen, and an electron donor as essential components; and metallocene-based catalysts.

The catalyst for stereoregular polymerization of propylene is preferably a catalyst system combining a solid catalyst component containing magnesium, titanium, halogen, and an electron donor as essential components, an organoaluminum compound, and an electron donating compound. Specific examples thereof include catalyst systems described in JP-A-61-218606, JP-A-61-287904, JP-A-7-216017, and JP-A-2004-182876.

The propylene-based polymer composition according to the present embodiment may contain a stretchability improver in addition to the propylene-based polymer as described above. Examples of the stretchability improver include at least one selected from the group consisting of a β-crystal nucleating agent and a hydrocarbon resin.

The β-crystal nucleating agent refers to a compound capable of forming a β-crystal having a hexagonal crystal structure in a propylene-based polymer. The β-crystal nucleating agent is not particularly limited, and various conventionally known β-crystal nucleating agents can be used. Examples of the β-crystal nucleating agent include amide compounds typified by N,N'-dicyclohexyl-2,6-naphthalenedicarboxamide, N,N'-dicyclohexylterephthalamide, and N,N'-diphenylhexanediamide, tetraoxaspiro compounds, quinacridones typified by quinacridone and quinacridonequinone, iron oxides having a nanoscale size, alkaline or alkaline earth metal salts of carboxylic acids typified by calcium pimelate, potassium 1,2-hydroxystearate, magnesium benzoate or magnesium succinate, and magnesium phthalate, aromatic sulfonic acid compounds typified by sodium benzenesulfonate or sodium naphthalenesulfonate, diesters or triesters of di- or tribasic carboxylic acids, phthalocyanine-based pigments typified by phthalocyanine blue, a two-component compound composed of a component A which is an organic dibasic acid and a component B which is an oxide, a hydroxide or a salt of a Group IIA metal of the periodic table, and a composition composed of a cyclic phosphorus compound and a magnesium compound, and one or two or more types thereof may be used in combination. Among the above β-crystal nucleating agents, N,N'-dicyclohexyl-2,6-naphthalenedicarboxamide, N,N'-dicyclohexylterephthalamide, and N,N'-diphenylhexanediamide, which are amide compounds, are preferable, and N,N'-dicyclohexyl-2,6-naphthalenedicarboxamide is more preferable.

When the propylene-based polymer composition of the present embodiment contains a β-crystal nucleating agent, the content of the β-crystal nucleating agent is preferably 50 ppm by mass to 5,000 ppm by mass, more preferably 100 ppm by mass to 1,500 ppm by mass, and still more preferably 100 ppm by mass to 900 ppm by mass.

Examples of the hydrocarbon resin include a cyclopentadiene-based resin containing a petroleum-based unsaturated hydrocarbon as a raw material, and a resin containing a higher olefin-based hydrocarbon as a main raw material.

When the propylene-based polymer composition of the present embodiment contains a hydrocarbon resin, the content of the hydrocarbon resin is preferably 0.1 mass% to 30 mass%, more preferably 0.3 mass% to 20 mass%, and still more preferably 0.5 mass% to 10 mass%.

The propylene-based polymer composition of the present embodiment satisfies requirements (1) and (2) below.

(1) The amount of a component having a molecular weight of 100,000 or less, as measured by gel permeation chromatography (hereinafter, referred to as GPC), is 30 mass% to 50 mass%.
(2) The amount of a component having a molecular weight of 100,000 or more and 800,000 or less, as measured by gel permeation chromatography, is 35 mass% to 52 mass%.

The amount of the component having a molecular weight of 100,000 or less and the amount of the component having a molecular weight of 100,000 or more and 800,000 or less can be determined by the method described in [Examples]

described later.

The amount of the component having a molecular weight of 100,000 or less, as measured by GPC, is preferably 35 mass% to 50 mass%, and more preferably 40 mass% to 50 mass%. The amount of the component having a molecular weight of 100,000 or less can be changed by, for example, mixing a plurality of types of propylene-based polymers having different MFRs to adjust the molecular weight and molecular weight distribution of the propylene-based polymer composition.

The amount of the component having a molecular weight of 100,000 or more and 800,000 or less, as measured by GPC, is preferably 40 mass% to 52 mass%, and more preferably 42 mass% to 52 mass%. The amount of the component having a molecular weight of 100,000 or more and 800,000 or less can be changed by, for example, mixing a plurality of types of propylene-based polymers having different MFRs to adjust the molecular weight and molecular weight distribution of the propylene-based polymer composition.

The propylene-based polymer composition of the present embodiment preferably further satisfies requirement (3) below.

(3) The amount of a component having a molecular weight of 800,000 or more, as measured by gel permeation chromatography, is 4 mass% to 18 mass%.

The amount of the component having a molecular weight of 800,000 or more can be determined by the method described in [Examples] described later.

The amount of the component having a molecular weight of 800,000 or more, as measured by GPC, is preferably 4 mass% to 15 mass%, and more preferably 7 mass% to 13 mass%. The amount of the component having a molecular weight of 800,000 or more can be changed by, for example, mixing a plurality of types of propylene-based polymers having different MFRs to adjust the molecular weight and molecular weight distribution of the propylene-based polymer composition.

The melt flow rate (hereinafter, abbreviated as MFR) of the propylene-based polymer composition is preferably 4 g/10 min to 18 g/10 min, more preferably 4 g/10 min to 15 g/10 min, and still more preferably 6 g/10 min to 12 g/10 min. By using the propylene-based polymer having an MFR in the above range, there is an effect that the molten polypropylene has an appropriate viscosity, good stretching processability can be exhibited in the production of the biaxially stretched film, and high rigidity and an excellent shrinkage ratio at high temperatures can be exhibited in the biaxially stretched film. The MFR of the propylene-based polymer composition can be changed by, for example, mixing a plurality of types of propylene-based polymers having different MFRs to adjust the molecular weight and molecular weight distribution of the propylene-based polymer composition. The MFR can be determined by the method described in [Examples] described later.

The isotactic pentad fraction (hereinafter, abbreviated as [mmmm]) of the propylene-based polymer composition is preferably 98.3% or more, and more preferably 98.5% to 100%. By using the propylene-based polymer composition having [mmmm] within the above range, there is an effect that high rigidity and an excellent shrinkage ratio at high temperatures can be exhibited in the biaxially stretched film. The [mmmm] of the propylene-based polymer composition can be adjusted to the above range by selecting the type of external donor to be used in the polymerization of propylene. Specific examples of the external donor include cyclohexylethyldimethoxysilane, dicyclopentyldimethoxysilane, and di-tert-butyldimethoxysilane. Note that [mmmm] can be determined by the method described in [Examples] described later.

The intrinsic viscosity of the propylene-based polymer composition is preferably 1.3 dL/g to 2.1 dL/g, more preferably 1.3 dL/g to 1.9 dL/g, and still more preferably 1.4 dL/g to 1.8 dL/g. The propylene-based polymer composition having an intrinsic viscosity in the above range has an effect of being excellent in fluidity and processability. The intrinsic viscosity of the propylene-based polymer composition can be changed by mixing a plurality of types of propylene-based polymers having different intrinsic viscosities to adjust the molecular weight and molecular weight distribution of the propylene-based polymer composition. The intrinsic viscosity can be determined by the method described in [Examples] described later.

The amount of the cold xylene soluble component (CXS) of the propylene-based polymer composition is preferably 3.0 mass% or less, more preferably 0.1 mass% to 2.0 mass%, and still more preferably 0.3 mass% to 1.5 mass%. When the CXS is in the above range, there is an effect that good stretching processability can be exhibited in the production of the biaxially stretched film, and high rigidity and an excellent shrinkage ratio at high temperatures can be exhibited in the biaxially stretched film. Note that the CXS can be determined by the method described in [Examples] described later.

The biaxially stretched film according to the present embodiment can be obtained by biaxially stretching the propylene-based polymer composition of the present embodiment. A specific method of the biaxial stretching will be described later.

The thickness of the biaxially stretched film according to the present embodiment is preferably 10 um to 70 um, and more preferably 10 um to 30 um.

The method for producing a biaxially stretched film according to the present embodiment may be a sequential biaxial stretching method or a simultaneous biaxial stretching method.

The method for producing a biaxially stretched film according to the present embodiment includes an extrusion step of heating and melting the propylene-based polymer composition of the present embodiment using an extruder, and extruding the propylene-based polymer composition onto a cooling roll to obtain an unstretched sheet. In the extrusion step, for example, the propylene-based polymer composition is heated and melted using an extruder, and extruded onto a cooling roll from a T-die to cool and solidify the extruded composition in a sheet shape, whereby an unstretched sheet can be obtained.

The method for producing a biaxially stretched film according to the present embodiment includes an MD stretching step of stretching the unstretched sheet obtained in the extrusion step 4 times to 10 times, preferably 5 times to 10 times in the MD direction using a stretching roll to obtain a uniaxially stretched sheet.

The method for producing a biaxially stretched film according to the present embodiment includes a TD stretching step of stretching the uniaxially stretched sheet obtained in the MD stretching step 4 times to 20 times, preferably 4 times to 10 times in the TD direction in a heating furnace using two lines of chucks arranged along the MD direction to obtain a biaxially stretched film. In the TD stretching step, for example, both side ends in the TD direction of the uniaxially stretched sheet are clamped with two lines of chucks arranged along the MD direction, and the uniaxially stretched sheet is stretched in the TD direction at the above-described magnification in a heating furnace including a preheating unit, a stretching unit, and a heat treatment unit, whereby a biaxially stretched film can be obtained.

The method for producing a biaxially stretched film according to the present embodiment may include a relaxation step of relaxing the stretching in the TD direction of the biaxially stretched film obtained in the TD stretching step by 3% to 30%, preferably 3% to 25% in the TD direction in a heating furnace using two lines of chucks arranged along the MD direction. In the relaxation step, the distance in the TD direction between two lines of chucks holding both ends in the TD direction of the biaxially stretched film obtained in the TD stretching step is narrowed to relax the stretching in the TD direction at the above ratio. When the relaxation ratio is less than 3%, the shrinkage ratio during heating is high, and a biaxially stretched film having excellent heat resistance cannot be obtained. When the relaxation ratio exceeds 30%, the thickness unevenness of the film tends to be large. The relaxation ratio can be determined by the following formula (X).

$$\text{Relaxation ratio} = (L1 - L2)/L1 \times 100 \ \dots \ (X)$$

(In the formula, L1 represents a distance between chucks in the TD direction before relaxation of the film, and L2 represents a distance between chucks in the TD direction after relaxation of the film.)

The method for producing a biaxially stretched film according to the present embodiment may include a step of performing a corona treatment or the like as necessary.

In the above production method, the melting temperature at the time of heating and melting the propylene-based polymer composition by an extruder is preferably 230 to 290°C. The temperature of the cooling roll at the time of cooling and solidifying the propylene-based polymer composition extruded from the T-die in a sheet shape is preferably 10°C to 100°C. The temperature of the stretching roll at the time of stretching the unstretched sheet in the MD direction is preferably 110 to 165°C. The heating temperature at the time of stretching the uniaxially stretched sheet in the TD direction is preferably 150 to 200°C, and the heating temperature at the time of relaxing the biaxially stretched film in the TD direction is preferably 150 to 200°C.

The biaxially stretched film according to the present embodiment can be used as one layer of a multilayer film. The multilayer film is obtained by laminating any layer on a layer formed of the biaxially stretched film according to the present embodiment. For example, any layer such as a sealant layer, a gas barrier layer, an adhesive layer, or a printing layer can be laminated on the biaxially stretched film according to the present embodiment to form a multilayer film. Among them, it is preferable to laminate a sealant layer using an olefin-based film on a layer formed of the biaxially stretched film according to the present embodiment, and there is an effect that the resulting multilayer film is easily recycled. Examples of the method for preparing a multilayer film using the biaxially stretched film according to the present embodiment include an extrusion lamination method, a heat lamination method, a dry lamination method, and the like which are commonly used.

The biaxially stretched film according to the present embodiment can be used as various packaging materials. For example, the packaging bag formed of the above multilayer film can be used for packaging any packaging object such as food, clothing, and miscellaneous goods.

The propylene-based polymer composition, the biaxially stretched film, and the packaging bag according to the present embodiment are not limited to the above-described embodiments, and various modifications can be made without departing from the gist of the present invention. In addition, it is a matter of course that the configurations, methods, and the like of the plurality of embodiments described above and below may be optionally adopted and combined (configuration, method, and the like according to one embodiment may be applied to the configurations, methods, and the like according to other embodiments).

EXAMPLES

The measured value of each item in Examples and Comparative Examples was measured by the following method.

(1) Molecular weight, amount of component with specific molecular weight

Various molecular weights (number average molecular weight Mn, weight average molecular weight Mw, z average molecular weight Mz) and the amount (wt%) of component with a specific molecular weight of the propylene-based polymer composition were measured under the following conditions by gel permeation chromatography (GPC). Based on the description of ISO16014-1, a baseline on the chromatogram was defined to designate a peak derived from the propylene-based polymer.

(GPC apparatus and software)

- Apparatus: HLC-8321GPC/HT (Tosoh Corporation)
- Software: HLC-8321 GPC/HT Program Version 2.02

(Tosoh Corporation)

(Measurement conditions)

- GPC column: TSKgel GMHHR-H (S) HT 7.8 mm I.D. $\times$ 300 mm (Tosoh Corporation) three columns
- Mobile phase: o-dichlorobenzene (FUJIFILM Wako Pure Chemical Corporation, special grade) to which BHT was added at a concentration of 0.1 g/100 mL was used.

- Flow rate: 1 mL/min
- Column oven temperature: 140°C
- Autosampler temperature: 140°C
- System oven temperature: 40°C
- Detector: refractive index detector (RID)
- RID cell temperature: 140°C
- Sample solution injection amount: 300 μL

(Conditions for preparing sample solution)

- Solvent: o-dichlorobenzene to which BHT was added at a concentration of 0.1 g/100 mL was used.
- Sample solution concentration: 1 mg/mL
- Dissolution conditions: 5 mg of a sample was enclosed in a 1,000-mesh SUS wire mesh bag, the wire mesh bag enclosing the sample was placed in a test tube, 5 mL of a solvent was added to the test tube, the test tube was covered with aluminum foil, the test tube was set in an automatic shaker for dissolution DF-8020 (Tosoh Corporation), and the mixture was stirred at a stirring speed of 60 reciprocations/min at 140°C for 120 minutes.

(Analysis method)

As a standard substance for GPC column calibration, standard polystyrene manufactured by Tosoh Corporation was each weighed in the combinations shown in the following table. To the weighed polystyrene, 5 mL of o-dichlorobenzene (the same composition as that of the mobile phase) was added, and the mixture was allowed to stand at room temperature for 120 minutes for dissolution.

[Table 1]

| Combination 1 | F700 | 0.4 mg | F20 | 0.9 mg | A5000 | 1.2 mg |
|---|---|---|---|---|---|---|
| Combination 2 | F288 | 0.4 mg | F10 | 1.0 mg | A2500 | 1.2 mg |
| Combination 3 | F80 | 0.7 mg | F4 | 1.1 mg | A1000 | 1.3 mg |
| Combination 4 | F40 | 0.8 mg | F2 | 1.1 mg | A500 | 1.3 mg |

The average molecular chain lengths An, Aw, and Az in terms of polystyrene of the propylene-based polymer composition were determined using a calibration curve obtained from the standard substance. The average molecular chain lengths in terms of polystyrene were each multiplied by a Q factor of 26.4 of polypropylene to obtain average molecular weights Mn, Mw, and Mz in terms of polypropylene. In addition, the amount of component with a specific molecular weight in the propylene-based polymer composition was each determined by obtaining an integral distribution curve with the total area enclosed by the molecular weight distribution curve derived from the propylene-based polymer and the base line as 100%. As a result, the amount of the component having a molecular weight of 100,000 or less in terms of polypropylene, the amount of the component having a molecular weight of 100,000 or more and 800,000 or less, and the amount of the component having a molecular weight of 800,000 or more were determined.

(2) Melt flow rate (MFR, unit: g/10 min)

The MFR of the propylene-based polymer composition was measured at a temperature of 230°C and a load of 2.16 kg according to the Method A specified in JIS K7210-1:2014.

(3) Isotactic pentad fraction ([mmmm], unit: %)

The [mmmm] of the propylene-based polymer composition was measured by 13C-NMR under the following conditions. The NMR absorption peak of the propylene-based polymer contained in the propylene-based polymer composition was assigned according to the method published by A. Zambelli et al. (Macromolecules, volume 8, page 687, 1975).

[Measurement conditions]

        Model: Bruker AVANCE600
        Probe: 10 mm-cryoprobe
        Measurement temperature: 135°C
        Pulse repeating time: 4 seconds
        Pulse width: 45°
        Number of scans: 256 times
        Magnetic field strength: 600 MHz

(4) Intrinsic viscosity ([η], unit: dL/g)

The intrinsic viscosity of the propylene-based polymer or the propylene-based polymer composition was measured in tetralin at 135°C using an Ubbelohde viscometer.

(5) Amount of cold xylene soluble component (CXS, unit: mass%)

After 0.1 g or 1 g of the propylene-based polymer composition was completely dissolved in 100 ml of boiling xylene, the temperature of the mixture was lowered to 20°C, and the mixture was stirred for 1 hour. The obtained mixture was filtered into a precipitate and a solution, and then the amount of components dissolved in the solution was quantified by liquid chromatography under the following conditions to determine CXS.

        Column: SHODEX GPC KF-801
        Eluent: tetrahydrofuran
        Column oven temperature: 40°C
        Sample injection amount: 130 $\mu$L
        Flow rate: 1 mL/min
        Detector: differential refractometer

(6) Film thickness (unit: um)

The thickness of the biaxially stretched film was measured with a contact-type film thickness gauge according to the Method A described in JIS K7130-1999.

(7) Young's modulus (unit: GPa)

A biaxially stretched film of 120 mm $\times$ 20 mm was collected so that the long side direction (120 mm) of the film is aligned with the measurement direction (flow direction in the film formation/hereinafter, MD direction). The sample was subjected to a tensile test in an atmosphere of 23°C and a humidity of 50% at a distance between chucks of 60 mm and a tensile speed of 5 mm/min using UNIVERSAL TESTING MACHINE STB-1225 manufactured by A&D Company Limited. The Young's modulus was measured from the tangent at the zero point of the tension-stress curve.

(8) Heat shrinkage ratio (unit: %)

A 100 mm square film (100 mm in length × 100 mm in width) was collected as a sample of the biaxially stretched film, a gauge line of 80 mm in the MD direction was drawn on the film, and the film was held in a state of being hung down in an oven at 150°C for 30 minutes. Thereafter, the film was taken out and cooled at room temperature for 30 minutes, and then each gauge line length was measured. The heat shrinkage ratio in each direction was calculated from the following calculation formula. A small heat shrinkage ratio indicates excellent dimensional stability at high temperatures.

Heat shrinkage ratio (%) = {80 - gauge line length after heating (mm))/80} × 100

The components used in Examples and Comparative Examples are as follows.

<Example 1: preparation of propylene-based polymer composition 1 and biaxially stretched film 1>

A bulk polymerization tank and a gas phase polymerization tank were connected in series, and polymerization was performed according to the following procedure. Propylene and hydrogen were supplied to the bulk polymerization tank at a ratio of a hydrogen supply amount of 1 NL (normal liter) to a propylene supply amount of 10 kg by a bulk polymerization method, using a Ziegler-Natta catalyst, triethylaluminum as a co-catalyst, and dicyclopentyldimethoxysilane as an external donor, and propylene was polymerized to obtain a propylene-based polymer 1-1. As a result of sampling and analyzing a part of the propylene-based polymer 1-1, the intrinsic viscosity thereof was 3.6 dL/g. The propylene-based polymer 1-1 was continuously transferred to the gas phase polymerization tank without being deactivated, and a propylene-based polymer 1-2 was polymerized in an environment of an effective hydrogen concentration (hydrogen concentration/(hydrogen concentration + propylene concentration)) of a gas phase part of 13.2 mol% by a gas phase polymerization method to obtain a propylene-based polymer composition (containing the propylene-based polymer 1-1 and the propylene-based polymer 1-2). The content of the propylene-based polymer 1-1 in 100 parts by mass of the propylene-based polymer composition was 36 parts by mass, and the content of the propylene-based polymer 1-2 was 64 parts by mass. The intrinsic viscosity of the propylene-based polymer 1-2 was calculated from the following formula to be 0.8 dL/g.

$$[\eta]_{1-2} = ([\eta]_T \times 100 - [\eta]_{1-1} \times W_{1-1})/W_{1-2}$$

(In the formula,

$[\eta]_{1-2}$ represents the intrinsic viscosity (dL/g) of the propylene-based polymer 1-2.
$[\eta]_T$ represents the intrinsic viscosity (dL/g) of the propylene-based polymer composition.
$[\eta]_{1-1}$ represents the intrinsic viscosity (dL/g) of the propylene-based polymer 1-1.
$W_{1-1}$ represents the content (mass%) of the propylene-based polymer 1-1.
$W_{1-2}$ represents the content (mass%) of the propylene-based polymer 1-2.)

In 100 parts by mass of the obtained propylene-based polymer composition, 0.01 parts by mass of DHT-4C (neutralizing agent, manufactured by Kyowa Chemical Industry Co., Ltd.), 0.18 parts by mass of IRGANOX1010 (manufactured by BASF Japan Ltd.), and 0.25 parts by mass of IRGAFOS168 (manufactured by BASF Japan Ltd.) were blended, and then the mixture was melt-extruded to obtain a propylene-based polymer composition 1 in a pellet form. The propylene-based polymer composition 1 had Mn of 50,000, Mw of 280,000, and Mz of 960,000. The physical property values of the obtained propylene-based polymer composition 1 are shown in the following Table 2.

The propylene-based polymer composition 1 was heated and melted at a resin temperature of 250°C using a T-die film forming machine equipped with an extruder having a screw diameter of 20 mmφ, and then extruded onto a cooling roll at 80°C to obtain an unstretched sheet having a thickness of 0.5 mm. The four sides of the obtained unstretched sheet were clamped with chucks, and the sheet was preheated for 3 minutes in a heating furnace heated at 157°C, and then simultaneously stretched 6 times in each of the MD direction and the TD direction (direction orthogonal to the flow in film formation) to obtain a biaxially stretched film 1. The production conditions and measured values of physical properties of the obtained biaxially stretched film 1 are shown in the following Table 3.

<Example 2: preparation of propylene-based polymer composition 2 and biaxially stretched film 2>

A bulk polymerization tank and a gas phase polymerization tank were connected in series, and polymerization was performed according to the following procedure. Using a Ziegler-Natta catalyst, triethylaluminum as a co-catalyst, and cyclohexylethyldimethoxysilane as an external donor, propylene was polymerized by a bulk polymerization method without supplying hydrogen to obtain a propylene-based polymer 2-1. As a result of sampling and analyzing a part of the propylene-based polymer 2-1, the intrinsic viscosity thereof was 7.1 dL/g. The propylene-based polymer 2-1 was continuously transferred to the gas phase polymerization tank without being deactivated, and a propylene-based polymer 2-2 was polymerized in an environment of an effective hydrogen concentration of 4.9 mol% in a gas phase part by a gas phase polymerization method to obtain a propylene-based polymer composition (containing the propylene-based polymer 2-1 and the propylene-based polymer 2-2). The content of the propylene-based polymer 2-1 in 100 parts by mass of the propylene-based polymer composition was 20 parts by mass, and the content of the propylene-based polymer 2-2 was 80 parts by mass. The intrinsic viscosity of the propylene-based polymer 2-2 was calculated in the same manner as in the propylene-based polymer composition 1 to be 0.9 dL/g.

In 100 parts by mass of the obtained propylene-based polymer composition, 0.01 parts by mass of DHT-4C (neutralizing agent, manufactured by Kyowa Chemical Industry Co., Ltd.), 0.18 parts by mass of IRGANOX1010 (manufactured by BASF Japan Ltd.), and 0.25 parts by mass of IRGAFOS168 (manufactured by BASF Japan Ltd.) were blended, and then the mixture was melt-extruded to obtain a propylene-based polymer composition 2 in a pellet form. The propylene-based polymer composition 2 had Mn of 49,000, Mw of 320,000, and Mz of 1,420,000. The physical property values of the obtained propylene-based polymer composition 2 are shown in the following Table 2.

A biaxially stretched film 2 was obtained under the same conditions as in Example 1 except that the propylene-based polymer composition 1 in Example 1 was changed to the propylene-based polymer composition 2. The production conditions and measured values of physical properties of the obtained biaxially stretched film 2 are shown in the following Table 3.

<Synthesis Example 1: preparation of propylene-based polymer composition 3-1>

Using a Ziegler-Natta catalyst, triethylaluminum as a co-catalyst, and cyclohexylethyldimethoxysilane as an external donor, propylene was polymerized in an environment of an effective hydrogen concentration of 9.3 mol% in a gas phase part by a gas phase polymerization method to obtain a propylene-based polymer 3-1. The intrinsic viscosity of the propylene-based polymer 3-1 was 0.9 dL/g. In 100 parts by mass of the obtained propylene-based polymer 3-1, 0.01 parts by mass of DHT-4C (neutralizing agent, manufactured by Kyowa Chemical Industry Co., Ltd.) and 0.125 parts by mass of IRGANOX1010 (manufactured by BASF Japan Ltd.) were blended, and then the mixture was melt-extruded to obtain a propylene-based polymer composition 3-1 in a pellet form.

<Synthesis Example 2: preparation of propylene-based polymer intermediate composition 3-2>

Using a Ziegler-Natta catalyst, triethylaluminum as a co-catalyst, and cyclohexylethyldimethoxysilane as an external donor, propylene was polymerized in an environment of an effective hydrogen concentration of 0.14 mol% in a gas phase part by a gas phase polymerization method to obtain a propylene-based polymer 3-2. The intrinsic viscosity of the propylene-based polymer 3-2 was 2.4 dL/g. In 100 parts by mass of the obtained propylene-based polymer 3-2, 0.01 parts by mass of DHT-4C (neutralizing agent, manufactured by Kyowa Chemical Industry Co., Ltd.), 0.05 parts by mass of IRGANOX1010 (antioxidant, manufactured by BASF Japan Ltd.), and 0.1 parts by mass of SUMILIZER GP (antioxidant, manufactured by Sumitomo Chemical Co., Ltd.) were blended, and then the mixture was melt-extruded to obtain a propylene-based polymer composition 3-2 in a pellet form.

<Example 3: preparation of propylene-based polymer composition 3 and biaxially stretched film 3>

The propylene-based polymer composition 3-1 (55 parts by mass) and the propylene-based polymer composition 3-2 (45 parts by mass) were mixed to prepare a propylene-based polymer composition 3. The propylene-based polymer composition 3 had Mn of 44,000, Mw of 220,000, and Mz of 640,000. The physical property values of the pellet obtained by melt-extruding the propylene-based polymer composition 3 are shown in the following Table 2.

A biaxially stretched film 3 was obtained under the same conditions as in Example 1 except that the propylene-based polymer composition 1 in Example 1 was changed to the propylene-based polymer composition 3. The production conditions and measured values of physical properties of the obtained biaxially stretched film 3 are shown in the following Table 3.

<Comparative Example 1: preparation of propylene-based polymer composition C1 and biaxially stretched film C1>

Using a Ziegler-Natta catalyst, triethylaluminum as a co-catalyst, and cyclohexylethyldimethoxysilane as an external donor, propylene was polymerized in an environment of a hydrogen concentration of 0.98 mol% by a gas phase polymerization method to obtain a propylene-based polymer C1-1. The intrinsic viscosity of the propylene-based polymer C1-1 was 1.7 dL/g.

Using a Ziegler-Natta catalyst, triethylaluminum as a co-catalyst, and cyclohexylethyldimethoxysilane as an external donor, propylene was polymerized in an environment of an effective hydrogen concentration of 0.014 mol% in a gas phase part by a gas phase polymerization method to obtain a propylene-based polymer C1-2. The intrinsic viscosity of the propylene-based polymer C1-2 was 3.6 dL/g.

The propylene-based polymer C1-1 (91 parts by mass), the propylene-based polymer C1-2 (9 parts by mass), 0.01 parts by mass of DHT-4C (neutralizing agent, manufactured by Kyowa Chemical Industry Co., Ltd.), 0.18 parts by mass of IRGANOX1010 (manufactured by BASF Japan Ltd.), and 0.25 parts by mass of IRGAFOS168 (manufactured by BASF Japan Ltd.) were blended, and then mixed to prepare a propylene-based polymer composition C1. The propylene-based polymer composition C1 had Mn of 66,000, Mw of 250,000, and Mz of 660,000. The physical property values of the pellet obtained by melt-extruding the propylene-based polymer composition C1 are shown in the following Table 2.

A biaxially stretched film C1 was obtained under the same conditions as in Example 1 except that the propylene-based polymer composition 1 in Example 1 was changed to the propylene-based polymer composition C1. The production conditions and measured values of physical properties of the obtained biaxially stretched film C1 are shown in the following Table 3.

<Synthesis Example 3: preparation of β-crystal nucleating agent masterbatch>

Using a Ziegler-Natta catalyst, triethylaluminum as a co-catalyst, and cyclohexylethyldimethoxysilane as an external donor, propylene was polymerized in an environment of an effective hydrogen concentration of 0.98 mol% in a gas phase part by a gas phase polymerization method to obtain a propylene-based polymer. The intrinsic viscosity of the obtained propylene-based polymer was 1.7 dL/g. In 95 parts by mass of the obtained propylene-based polymer, 5 parts by mass of NU-100 (β-crystal nucleating agent, manufactured by New Japan Chemical Co., Ltd.), 0.005 parts by mass of DHT-4C (neutralizing agent, manufactured by Kyowa Chemical Industry Co., Ltd.), 0.09 parts by mass of IRGANOX1010 (antioxidant, manufactured by BASF Japan Ltd.), and 0.05 parts by mass of SUMILIZER GP (antioxidant, manufactured by Sumitomo Chemical Co., Ltd.) were blended, and then the mixture was melt-extruded to obtain a β-crystal nucleating agent masterbatch in a pellet form.

<Example 11: preparation of propylene-based polymer composition 11 and biaxially stretched film 11>

The propylene-based polymer composition (containing the propylene-based polymer 1-1 and the propylene-based polymer 1-2) (99 parts by mass) used for producing the propylene-based polymer composition 1, the β-crystal nucleating agent masterbatch (1 part by mass), 0.01 parts by mass of DHT-4C (neutralizing agent, manufactured by Kyowa Chemical Industry Co., Ltd.), 0.18 parts by mass of IRGANOX1010 (manufactured by BASF Japan Ltd.), and 0.25 parts by mass of IRGAFOS168 (manufactured by BASF Japan Ltd.) were blended, and then mixed to prepare a propylene-based polymer composition 11. The propylene-based polymer composition 11 had Mn of 53,000, Mw of 270,000, and Mz of 870,000. The physical property values of the pellet obtained by melt-extruding the propylene-based polymer composition 11 are shown in the following Table 2.

The propylene-based polymer composition 11 was heated and melted at a resin temperature of 250°C using a T-die film forming machine equipped with an extruder having a screw diameter of 20 mmϕ, and then extruded onto a cooling roll at 80°C to obtain an unstretched sheet having a thickness of 0.5 mm. The four sides of the obtained unstretched sheet were clamped with chucks, and the sheet was preheated for 3 minutes in a heating furnace heated at 153°C, and then simultaneously stretched 6 times in each of the MD direction and the TD direction to obtain a biaxially stretched film 11. The production conditions and measured values of physical properties of the obtained biaxially stretched film 11 are shown in the following Table 3.

<Example 12: preparation of propylene-based polymer composition 12 and biaxially stretched film 12>

The propylene-based polymer composition (containing the propylene-based polymer 2-1 and the propylene-based polymer 2-2) (99 parts by mass) used for producing the propylene-based polymer composition 2, the β-crystal nucleating agent masterbatch (1 part by mass), 0.01 parts by mass of DHT-4C (neutralizing agent, manufactured by Kyowa Chemical Industry Co., Ltd.), 0.18 parts by mass of IRGANOX1010 (manufactured by BASF Japan Ltd.), and 0.25 parts by mass of IRGAFOS168 (manufactured by BASF Japan Ltd.) were blended, and then mixed to prepare a propylene-based polymer composition 12. The propylene-based polymer composition 12 had Mn of 47,000, Mw of 300,000, and Mz of 1,250,000. The physical property values of the pellet obtained by melt-extruding the propylene-based polymer composition 12 are shown in the following Table 2.

A biaxially stretched film 12 was obtained under the same conditions as in Example 11 except that the propylene-based polymer composition 11 in Example 11 was changed to the propylene-based polymer composition 12. The production conditions and measured values of physical properties of the obtained biaxially stretched film 12 are shown in the following Table 3.

<Example 13: preparation of propylene-based polymer composition 13 and biaxially stretched film 13>

The propylene-based polymer composition 3-1 (54 parts by mass), the propylene-based polymer composition 3-2 (45 parts by mass), and the β-crystal nucleating agent masterbatch (1 part by mass) were mixed to prepare a propylene-based polymer composition 13. The propylene-based polymer composition 13 had Mn of 47,000, Mw of 220,000, and Mz of 630,000. The physical property values of the pellet obtained by melt-extruding the propylene-based polymer composition 13 are shown in the following Table 2.

A biaxially stretched film 13 was obtained under the same conditions as in Example 11 except that the propylene-based polymer composition 11 in Example 11 was changed to the propylene-based polymer composition 13. The production conditions and measured values of physical properties of the obtained biaxially stretched film 13 are shown in the following Table 3.

[Table 2]

| | Materials | Amount (mass%) of component having molecular weight of 100,000 or less | Amount (mass%) of component having molecular weight of 100,000 to 800,000 | Amount (mass%) of component having molecular weight of 800,000 or more | MFR (g/10 min) | [mmmm] (%) | [η] (dL/g) | CXS (mass%) |
|---|---|---|---|---|---|---|---|---|
| Example 1 | Propylene-based poly-mer compo-sition 1 | 43 | 49 | 8 | 11 | 99.1 | 1.7 | 0.6 |
| Example 2 | Propylene-based poly-mer compo-sition 2 | 44 | 46 | 10 | 9 | 98.5 | 1.9 | 0.8 |
| Example 3 | Propylene-based poly-mer compo-sition 3 | 46 | 48 | 6 | 14 | 98.5 | 1.5 | 0.8 |
| Comparative Example 1 | Propylene-based poly-mer compo-sition C1 | 37 | 58 | 5 | 7 | 98.2 | 1.7 | 1.0 |
| Example 11 | Propylene-based poly-mer compo-sition 11 | 43 | 48 | 9 | 10 | 99.0 | 1.7 | 1.0 |
| Example 12 | Propylene-based poly-mer compo-sition 12 | 45 | 46 | 9 | 9 | 98.5 | 1.8 | 1.2 |
| Example 13 | Propylene-based poly-mer compo-sition 13 | 45 | 50 | 5 | 15 | 98.4 | 1.5 | 0.8 |

[Table 3]

| | Materials | Production conditions | | | | Physical properties | |
|---|---|---|---|---|---|---|---|
| | | Biaxially simultaneous stretching | | Resin temperature (°C) | Temperature in furnace (°C) | MD Young's modulus (GPa) | MD heat shrinkage ratio (%) |
| | | MD stretch ratio | TD stretch ratio | | | | |
| Example 1 | Propylene-based polymer composition 1 | 6 | 6 | 250 | 157 | 4.1 | 2.4 |
| Example 2 | Propylene-based polymer composition 2 | 6 | 6 | 250 | 157 | 3.8 | 2.2 |
| Example 3 | Propylene-based polymer composition 3 | 6 | 6 | 250 | 157 | 3.9 | 2.1 |
| Comparative Example 1 | Propylene-based polymer composition C1 | 6 | 6 | 250 | 157 | 3.8 | 3.0 |
| Example 11 | Propylene-based polymer composition 11 | 6 | 6 | 250 | 153 | 4.1 | 2.6 |
| Example 12 | Propylene-based polymer composition 12 | 6 | 6 | 250 | 153 | 4.2 | 2.0 |
| Example 13 | Propylene-based polymer composition 13 | 6 | 6 | 250 | 153 | 3.9 | 2.3 |

From the above Table 2, it is recognized that the biaxially stretched films of Examples have a smaller heat shrinkage ratio than those of the biaxially stretched films of Comparative Examples. That is, it can be seen that the biaxially stretched films of Examples are excellent in dimensional stability at high temperatures. In addition, it can be seen that the biaxially stretched films of Examples have a Young's modulus equal to or higher than those of the biaxially stretched films of Comparative Examples. That is, it can be seen that the biaxially stretched films of Examples are also excellent in rigidity.

INDUSTRIAL APPLICABILITY

The propylene-based polymer composition of the present invention, a biaxially stretched film containing the propylene-based polymer composition, and a packaging bag containing the biaxially stretched film can be used for packaging any packaging object such as food, clothing, and miscellaneous goods, and have high applicability in various industrial fields.

**Claims**

1.   A propylene-based polymer composition comprising two or more types of propylene-based polymers and satisfying requirements (1) and (2) below:

   (1) an amount of a component having a molecular weight of 100,000 or less, as measured by gel permeation chromatography, is 30 mass% to 50 mass%; and
   (2) an amount of a component having a molecular weight of 100,000 or more and 800,000 or less, as measured by gel permeation chromatography, is 35 mass% to 52 mass%.

2. The propylene-based polymer composition according to claim 1, further satisfying requirement (3) below:
   (3) an amount of a component having a molecular weight of 800,000 or more, as measured by gel permeation chromatography, is 4 mass% to 18 mass%.

3. The propylene-based polymer composition according to claim 1 or 2 comprising:

   a propylene-based polymer (a) having a melt flow rate of 3 g/10 min or less and/or an intrinsic viscosity of 2.0 dL/g or more; and
   a propylene-based polymer (b) having a melt flow rate of 15 g/10 min or more and/or an intrinsic viscosity of 1.4 dL/g or less.

4. The propylene-based polymer composition according to any one of claims 1 to 3, wherein the propylene-based polymer composition has a melt flow rate of 4 g/min to 20 g/min.

5. The propylene-based polymer composition according to any one of claims 1 to 4, wherein the propylene-based polymer composition has an isotactic pentad fraction of 98.0% or more.

6. The propylene-based polymer composition according to any one of claims 1 to 5, wherein the propylene-based polymer composition has an intrinsic viscosity of 1.3 dL/g to 2.3 dL/g.

7. The propylene-based polymer composition according to any one of claims 1 to 6, further comprising a stretchability improver.

8. The propylene-based polymer composition according to claim 7, wherein the stretchability improver is at least one selected from the group consisting of a β-crystal nucleating agent and a hydrocarbon resin.

9. A biaxially stretched film comprising the propylene-based polymer composition according to any one of claims 1 to 8.

10. A packaging bag comprising the biaxially stretched film according to claim 9.

## INTERNATIONAL SEARCH REPORT

| International application No. |
| --- |
| **PCT/JP2022/046428** |

| A. | CLASSIFICATION OF SUBJECT MATTER |
| --- | --- |

*C08L 23/10*(2006.01)i; *B29C 55/12*(2006.01)i; *B65D 65/02*(2006.01)i; *C08F 10/06*(2006.01)i; *C08J 5/18*(2006.01)i; *C08K 5/00*(2006.01)i; *C08L 57/00*(2006.01)i
FI: C08L23/10; B29C55/12; B65D65/02 E; C08F10/06; C08J5/18 CES; C08K5/00; C08L57/00

According to International Patent Classification (IPC) or to both national classification and IPC

| B. | FIELDS SEARCHED |
| --- | --- |

Minimum documentation searched (classification system followed by classification symbols)

C08L23/10; B29C55/12; B65D65/02; C08F10/06; C08J5/18; C08K5/00; C08L57/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2020/137790 A1 (TOYOBO CO., LTD.) 02 July 2020 (2020-07-02) claims, examples, paragraphs [0001], [0018], [0019], [0022]-[0024] | 1-10 |
| X | JP 2014-051658 A (TOYOBO CO., LTD.) 20 March 2014 (2014-03-20) claims, examples, paragraphs [0043], [0063] | 1-10 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 January 2023** | **14 February 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/046428**

| Patent document cited in search report | | | Publication date (day/month/year) | Patent family member(s) | Publication date (day/month/year) |
|---|---|---|---|---|---|
| WO | 2020/137790 | A1 | 02 July 2020 | US 2021/0388193 A1 claims, examples, paragraphs [0001], [0023]-[0029], [0036]-[0041] EP 3904052 A1 CN 113226703 A KR 10-2021-0109569 A | |
| JP | 2014-051658 | A | 20 March 2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015012324 A
- JP 61218606 A
- JP 61287904 A
- JP 7216017 A
- JP 2004182876 A

**Non-patent literature cited in the description**

- **A. ZAMBELLI et al.** *Macromolecules*, 1975, vol. 8, 687